# EUROPÄISCHE PATENTANMELDUNG

(11) **EP 3 360 826 A1**
(43) Veröffentlichungstag der Anmeldung: **15.08.2018**
(21) Anmeldenummer: 18152666.6
(22) Anmeldetag: 22.01.2018
(51) Int. Cl.: B65G 7/12

(54) **VORRICHTUNG ZUM VERBRINGEN VON WANNEN ODER BÜTTEN**

(30) Priorität: 09.02.2017 AT 442017; 27.10.2017 AT 4172017
(71) Anmelder: Bratuscha, Peter, 8010 Graz (AT)
(72) Erfinder: Bratuscha, Peter, 8010 Graz (AT)
(74) Vertreter: Wildhack & Jellinek

(57) **Zusammenfassung**

Die Erfindung betrifft eine Vorrichtung zum Verbringen von befüllbaren Wannen oder Bütten (1) aus Flachmaterial, welche mit einem Bodenteil (11) mit einer umlaufenden Seitenwand oder mit mindestens drei dergleichen Seitenwänden (12) und mit einem oberen Randbereich (13), welcher im Querschnitt eine nach außen gerichtete Profilform aufweist, gebildet sind. Um ein sicheres und problemloses Heben und Tragen der Wannen oder Bütten (1) zu ermöglichen und eine einfache Bauweise der Vorrichtung, eine leicht lösbare Befestigung derselben an der Wanne, eine Anpassung an unterschiedliche Wannengrößen mit geringem Aufwand und geringem Platzbedarf zu schaffen, ist erfindungsgemäß vorgesehen, dass die Längselemente (2) der Vorrichtung jeweils mindestens zwei gleichgerichtete distale Auflageteile (3) mit gleichem Niveau für senkrecht zur Wannenachse (AA') gerichtete Profilformbereiche (131) der Wanne (1), mindestens zwei lösbare Spannelemente (4) für diese und mindestens zwei Trag- oder Transportelemente (5) aufweisen.

## Beschreibung

Die Erfindung bezieht sich auf eine Vorrichtung zum Verbringen von befüllbaren Wannen oder Bütten aus Flachmaterial mit einem Bodenteil mit einer umlaufenden Seitenwand oder mindestens drei dergleichen Seitenwänden und mit einem oberen Randbereich, welcher im Querschnitt eine nach außen gerichtete Profilform mit im Wesentlichen normal beziehungsweise senkrecht oder parallel zur Wannenaxe gerichtete umlaufende, durch quer gerichtete Stege gestützte Bereiche aufweist und die Vorrichtung mindesten zwei im Wesentlichen gleichartige Längselemente umfasst.

Wannen oder Bütten sind größere, meist geringfügig konische Behältnisse, vorgesehen für eine Verwendung beim Gebäudebau und bei Renovierungsarbeiten, in landwirtschaftlichen Betrieben, als Wildwannen, als Traubenbütten und dergleichen. Im Wesentlichen dienen diese Behältnisse zur Aufnahme, Behandlung oder Bearbeitung und Separierung von Gütern, so dass im Hinblick auf eine Grundaufstellung eine Wandung derselben aus Flachmaterial mit geringen Dicken bevorzugt ist.

Eine Verbringung beziehungsweise ein Transport derartiger Wannen oder Bütten mit schwerer Befüllung ist durchwegs nicht möglich, weil dafür auch die Wannenstabilität bei händischem Zugriff nicht ausreicht. Um eine Stabilität der Wandform insbesondere im oberen Wandungsbereich zu verbessern, wurden nach außen gerichtete umlaufende Profilformen vorgesehen, welche ein Ausbeulen verhindern sollten.

Ein weitgehend unkoordinierbarer händischer Transport von gefüllten Wannen ist trotz umlaufender Profilform problem- und gefahrenbehaftet.

Als Vorrichtung zum Transport von Gegenständen, insbesondere eines Blumentopfes, ist aus der DE 298 09 804 U1 eine Trage mit zwei parallel zueinander verlaufenden Längsträgern mit endenseitigen Griffen bekannt, wobei zwischen den Längsträgern mittels Kunststoffformteilen zwei Querstreben mit teleskopisch veränderbaren Abstand angeordnet sind. Auch Stützelemente aus Aluminium zur Abstützung beispielweise für hohe Gewächse können mittels Kunststoffformteilen an Längsträgern oder Querstreben befestigt sein. Für einen rauen Arbeitsbetrieb erscheint eine derartige Vorrichtung wenig geeignet.

Ebenfalls für den Transport von Behältern, insbesondere von Pflanzenkübeln oder großem Blumentöpfen wird gemäß DE 10 2005 050 886 A1 vorgeschlagen, eine Vorrichtung zu verwenden, welche zwei Längsträger aufweist, die durch wenigstens einen Querträger bzw. Halter in einem eine reduzierte Breite beziehungsweise einem reduziertem Durchmesser des Behälters umschließenden Abstand zueinander fixierbar sind. Derartige Vorrichtungen sind im Wesentlichen für stabile Pflanzenkübel oder große Blumentöpfen geeignet, weil diese eine Stabilität und Eignung für kleinflächig angreifende Hubkräfte aufweisen.

Die US 2014/0265383 A1 offenbart eine Vorrichtung für Landschaftsgärtner, in welcher ein Behälter mittels Tragebändern in einer Hebeeinrichtung gehalten ist.

Eine Vorrichtung zum Transport von Behältern mit zwei zueinander beabstandeten stangenförmigen Längselementen, die durch mindestens einen Querträger verbunden sind, offenbart die DE 20 2009 016 231 U1. Für ein Umgreifen des Behälters, insbesondere Pflanzen- oder Blumentöpfe, sind zumindest Teilbereiche der Längselemente an diesen angepasst und umfassen zumindest abschnittsweise dessen Außenoberfläche.

Die Erfindung setzt sich zum Ziel, die aufgezeigten Probleme zu lösen und eine Vorrichtung zum Verbringen von befüllbaren Wannen oder Bütten aus Flachmaterial der eingangs genannten Art zu schaffen, welche ein sicheres und einfaches Heben und Tragen von aus dünnwandigem Flachmaterial bestehenden Wannen ermöglicht. Dabei umfasst das Ziel auch eine einfache Bauweise der Vorrichtung, eine leicht lösbare Befestigung derselben von den Wannen oder Bütten, eine Anpassung an unterschiedliche Wannengrößen mit geringem Aufwand und einen geringen Platzbedarf bei einer Lagerung.

Dieses Ziel wird bei einer Vorrichtung der eingangs genannten Art dadurch erreicht, dass die Längselemente jeweils mindestens zwei gleichgerichtete distale Auflageteile mit gleichem Niveau für senkrecht zur Wannenaxe gerichtete Profilformteile der Wanne, mindestens zwei lösbare Spannelemente für diese und mindestens zwei Trag- oder Transportelemente aufweisen.

Erfindungsgemäß bilden die distalen Auflageteile auf gleichem Niveau mit Vorteil eine Mehrzahl von Trageflächen für senkrecht zur Wannenaxe gerichete Profilformbereiche zwischen den Stützstegen und verhindern derart ein Einbeulen von Wandbereichen der Wanne.

Mittels der Spannelemente sind die Längselemente im Bereich der Profilform der Wanne angelenkt, wobei ein einfaches Verschieben zumindest eines Spannelementes eine unmittelbare Festlegung oder Lösung bewirkt.

Die endenseitigen Trage- oder Transportelemente an den Längselementen dienen einer manuellen Verbringung und/oder einer Verschiebung mit mindestens einem Laufrad.

Mit Vorteil sind die Längselemente als profilierte Stabelemente mit mindestens einem Verschiebeprofil ausgeformt, wodurch ein einfaches und sicheres Positionieren der Auflageteile mit einem Anpassen an unterschiedliche Wannengrößen und eine Verschiebung der Spanelemente ermöglicht sind.

Weiters ist es günstig, wenn die profilierten Längselemente beziehungsweise Stabelemente mit mindestens einem inneren Verschiebeprofil ausgeformt sind, weil derart ein Verschmutzen des Profils weitgehend verhindert und die Gleiteigenschaften in diesem erhaltbar sind.

Mit Vorteil sind die distalen Auflageteile auf den Längselementen verschiebbar und in gewünschten Positionen auf diesen festlegbar. Derart kann auf einfache und sichere Weise vorausschauend ein Anpassen der Vorrichtung an unterschiedliche Wannendimensionen erfolgen.

Ein besonderer Vorteil wird mit der erfindungsgemäßen Vorrichtung erreicht, wenn die Spannelemente auf den Längselementen verschiebbar ausgebildet sind und mittels dehnbaren Zugeinrichtungen jeweils mit einem festlegbaren Auflageteil in Wirkverbindung stehen. Derart ist lediglich ein bewusstes Lösen der Verbindung von Längselement und Wanne möglich.

Für eine Lagerung und Manipulation der Vorrichtung, insbesondere in engen Räumen, kann es gemäß einer Weiterbildung der Erfindung günstig und hilfreich sein, wenn die Längselemente, vorzugsweise im Bereich der halben Längserstreckung derselben, ein in Richtung gegen die distalen Auflageteile wirksames Drehgelenk aufweisen und derart zusammenklappbar gebildet sind. Entscheidend für eine hohe Stabilität der Längselemente kann dabei eine Integration des Drehgelenkes in einen Auflagebereich sein.

Wenn das Verschiebeprofil der Längselemente zusätzlich jeweils mindestens zwei Festlegeteile für Hebemittel aufweist, kann in günstiger Weise ein Transport von Wannen oder Bütten mittels eines Hebezeuges erfolgen.

Um eine Verletzungsgefahr bei einer manuellen Bedienung zu minimieren, ist von Vorteil, wenn die Längselemente jeweils endenseitig Handgriffe aufweisen.

Im Hinblick auf eine Erweiterung der Verwendbarkeit der Vorrichtung kann es günstig sein, wenn an einem Ende der Längselemente mittels Anbauteilen ein Laufrad lösbar befestigt ist und derart ein Schubkarren erstellbar ist.

Zur Erhöhung der Stabilität der Wannen oder Bütten kann es auch von Vorteil sein, wenn zwei Längselemente durch mindestens ein Querelement verbunden sind. Derart können in günstiger Weise Wannen oder Bütten mit einer umlaufenden Seitenwand oder auch solche mit polygonen Seitenwänden, also runde und vieleckige Gefäßtypen, sicher verbracht werden.

Im Folgenden soll die Erfindung an schematischen Prinzipskizzen , die allenfalls nur einen Ausführungsweg der Erfindung darstellen, näher erläutert werden.

Es zeigen
Fig. 1 eine befüllbare Wanne oder Bütte
Fig. 2 ein Längselement mit Auflageteilen, Spannelementen und Trag- oder Transportelementen
Fig.3 ein Längselement mit einem Verschiebeprofil
Fig.4 ein Längselement mit innerem Verschiebeprofil
Fig. 5 ein Längselement mit Drehgelenk

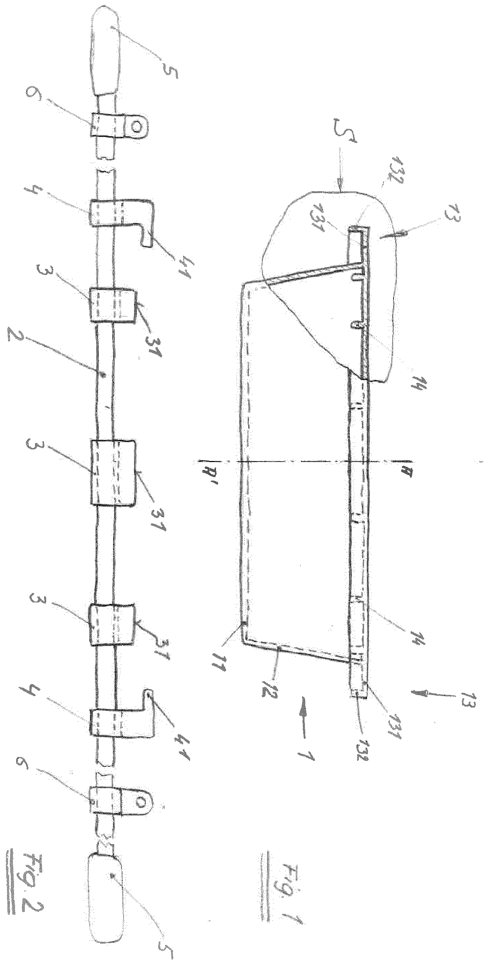

In Fig. 1 ist eine handelsübliche dünnwandige Wanne 1 dargestellt, welche einen flachen Bodenteil 11, Seitenwände 12 und einen oberen Randbereich 13 aufweist.
Der obere Randbereich 13 hat für eine Stabilisierung der Wannenform bezogen auf eine Wannenaxe AA' eine nach außen gerichtete Profilform mit im Wesentlichen senkrecht zur Wannenaxe AA' gerichtete Bereiche 131 sowie axparallele Enden 132 und Stege 14.

Der Bereich S zeigt einen Querschnitt der Profilform.

Fig. 2 zeigt ein erfindungsgemäßes Längselement mit drei distalen Auflageteilen 3 mit jeweils einem gleichen Distal-Niveau 31 zur Anlage an senkrecht zur Wannenaxe AA' gerichtete Profilformbereiche 131 der Wanne 1.

Die Auflageteile 3 sind auf den profilierten Längselementen 2 verschiebbar und in Positionen arretierbar, in welchen die distalen Niveauflächen 31 mit den im Wesentlichen senkrecht zur Axe AA' gerichteten Bereichen 131 der Profilform 13, gegebenenfalls unterschiedlich großer Wannen 1, korrespondieren.

Außerhalb der äußeren Auflageteile 3 sind auf jeweils einem Längselement 2 verschiebbare Spannelemente 4 mit gegeneinander gerichteten Zapfen 41 angeordnet, welche bei Annäherung an die Auflageteile 3 den Randbereich 13 der Wanne 1 am Längselement halten.

Wenn auf den Längselementen 2 die Auflageteile 3 arretierbar sind, ist es günstig, wenn durch Zugelemente (nicht dargestellt) die Spannelemente 4 an die Auflageteile 3 anstellbar sind.

Festlegeteile 6 im Bereich der Trag-und Transportmittel 5 der Längselemente 2 können zum Einsatz von Hebemitteln bei einer Verbringung von Wannen und Bütten 1 in günstiger Weise vorgesehen sein.

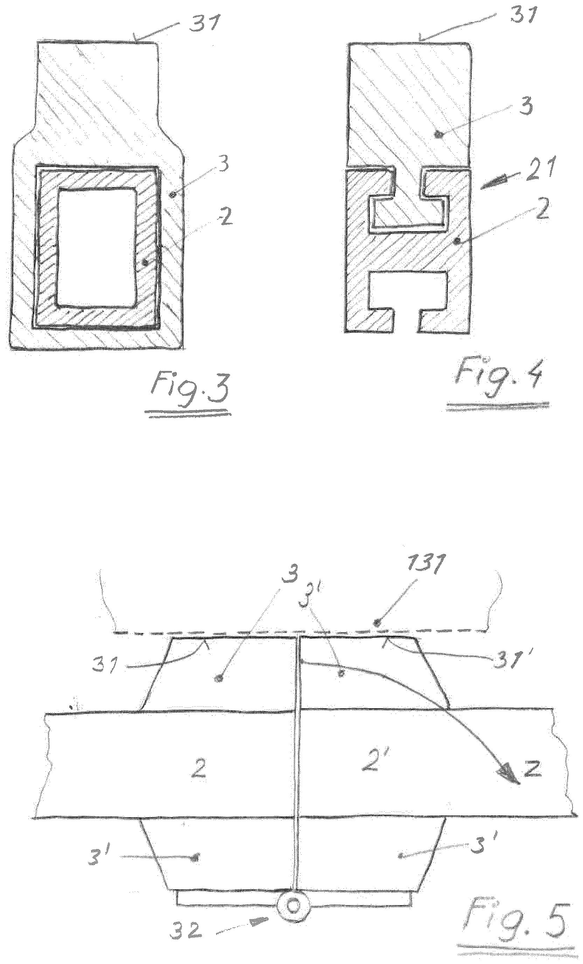

Fig. 3 zeigt im Querschnitt ein Längselement 2 als Stabelement mit einem äußeren Verschiebeprofil und ein Auflageteil 3 mit einer Niveaufläche 31.

In Fig. 4 ist ein Längselement 2 mit einem inneren Verschiebeprofil 21 und ein Auflageteil 3 mit einer Niveaufläche 31 im Prinzip dargestellt.

Fig. 5 zeigt schematisch ein zusammenklappbares Längselement 2 gebildet aus den in Querrichtung geteilten Längselementsegmenten 2, 2' und den Auflageelementsegmenten 3, 3', welche den distalen Niveauflächen 31, 31' gegenüberliegend mittels eines Drehgelenkes 32 nur in Richtung Z schwenkbar sind. Mittels des Abstandes des Drehgelenkes 32 von den Niveauflächen 31,31' zur Abstützung der Profilformteile 131 der Wanne 1 wird eine hohe Stabilität der Längselemente 2 bei Belastung erreicht.

## Patentansprüche

1. Vorrichtung zum Verbringen von befüllbaren Wannen oder Bütten (1) aus Flachmaterial mit einem Bodenteil (11) mit einer umlaufenden Seitenwand oder mindestens drei dergleichen Seitenwänden (12) und mit einem oberen Randbereich (13), welcher im Querschnitt eine nach außen gerichtete Profilform mit im Wesentlichen normal beziehungsweise senkrecht oder parallel zur Wannenaxe (AA') gerichtete umlaufende, durch quer gerichtete Stege (14) gestützte Bereiche aufweist und die Vorrichtung mindestens zwei im Wesentlichen gleichartige Längselemente (2) umfasst, **dadurch gekennzeichnet, dass** die Längselemente (2) jeweils mindestens zwei gleichgerichtete distale Auflageteile (3) mit gleichem Niveau (31) für senkrecht zur Wannenaxe gerichtete Profilformbereiche (131) der Wanne (1), mindestens zwei lösbare Spannelemente (4) für diese und mindestens zwei Trag- oder Transportelemente (5) aufweisen.

2. Vorrichtung nach Anspruch 1, **dadurch gekennzeichnet, dass** die Längselemente (2) als profilierte Stabelemente (2) mit mindestens einem Verschiebeprofil ausgeformt sind.

3. Vorrichtung nach Anspruch 1, **dadurch gekennzeichnet, dass** die profilierten Stabelemente (2) mit mindestens einem inneren Verschiebeprofil (21) ausgeformt sind.

4. Vorrichtung nach einem der Ansprüche 1 bis 3, **dadurch gekennzeichnet, dass** die distalen Auflagebereiche (3) auf den Längselementen (2) verschiebbar und gegebenenfalls in gewünschten Positionen auf diesen festlegbar gebildet sind.

5. Vorrichtung nach einem der Ansprüche 1 bis 4, **dadurch gekennzeichnet, dass** die lösbaren Spannelemente (4) auf den Längselementen (2) verschiebbar ausgebildet sind und gegebenenfalls mittels Zugeinrichtungen jeweils mit einem Auflagebereich (3) in Wirkverbindung stehen.

6. Vorrichtung nach einem der Ansprüche 1 bis 5, **dadurch gekennzeichnet, dass** die Längselemente (2) vorzugsweise im Bereich der halben Längserstreckung ein in Richtung gegen die distalen Auflageteile wirksames Drehgelenk (32) aufweisen.

7. Vorrichtung nach einem der Ansprüche 1 bis 6, **dadurch gekennzeichnet, dass** das Verschiebeprofil der Längselemente (2) jeweils mindestens zwei Festlegeteile (6) für Hebemittel aufweist.

8. Vorrichtung nach einem der Ansprüche 1 bis 7, **dadurch gekennzeichnet, dass** die Längselemente (2) endenseitig jeweils Handgriffe (5) aufweisen.

9. Vorrichtung nach einem der Ansprüche 1 bis 8, **dadurch gekennzeichnet, dass** an einem Ende der Längselemente (2) mittels Anbauteilen ein Rad (7) lösbar befestigt ist und derart ein sogenannter Schubkarren erstellbar ist.

10. Vorrichtung nach einem der Ansprüche 1 bis 9, **dadurch gekennzeichnet, dass** zwei Längselemente (2) durch mindestens ein Querelement verbunden sind.
